# EUROPEAN PATENT APPLICATION

(11) **EP 4 585 664 A1**
(43) Date of publication of application: **16.07.2025**
(21) Application number: 24382020.6
(22) Date of filing: 11.01.2024
(51) Int. Cl.: C09K 3/10

(54) **METHOD AND APPARATUS FOR MANUFACTURING A SMART FILM AND ULTRAVIOLET-CURABLE POLYMER FOR EDGE SEALING**

(71) Applicant: Dream Glass S. L., 28860 Paracuellos De Jarama (ES)
(72) Inventor: MESHKAT MAMALEK, Mojtaba, 28860 Paracuellos De Jarama (ES); PALANISAMY, Kumar, 28860 Paracuellos De Jarama (ES)
(74) Representative: TRBL Intellectual Property

(57) **Abstract**

The present invention relates to a method for manufacturing a smart film device, the method comprising several steps. A first step comprises cutting in the first conductive layer of the smart film arrangement (10), so that the cut divides the first conductive layer in a kiss-cut portion (40) and a scrap portion (41). Then, a removing roller (5) removes the scrap portion (41) of the first conductive layer from the smart film arrangement (10). Then, a curable polymer (60) is applied along the edge of the kiss-cut portion (40). Then, a radiation source (7) is applied over the curable polymer (60) to cure the curable polymer (60), thus creating a cured polymer around the edge of the kiss-cut portion (40). Finally, a second cutting head (8) cuts a final part which comprises the portion of the smart film arrangement comprising the kiss-cut portion and at least a portion of the cured polymer, separating the final part from the rest of the smart film arrangement. The invention also refers to a composition of the polymeric substance, comprising an acrylate oligomer, an amine acrylate oligomer, a thiol and a photoinitiator.

## Description

### FIELD OF THE INVENTION

The present invention lies within the technical field of smart films. More specifically, the invention relates to a fast ultraviolet-curable polymer for edge sealing of polymer-dispersed liquid crystal (PDLC) smart films, as well as to the edge sealing process of said films.

### BACKGROUND OF THE INVENTION

Polymer-dispersed liquid crystal (PDLC) smart films consist of liquid crystal droplets dispersed in an ultraviolet (UV)-cured optical polymer-based matrix coated between two sheets of conductive transparent layers (typically polyethylene terephthalate films coated with a transparent conductive oxide) effectively forming a capacitor. Said capacitor is laminated between two pieces of glass with an adhesive interlayer; typically, polyvinyl butyral (PVB), polyurethane (TPU), or ethylene vinyl acetate (EVA). In its default state, the liquid crystals droplets are randomly oriented, scattering light and producing an opaque state. However, when a voltage of sufficient strength is applied, the liquid crystals align themselves to the electric field, providing a direction for light to pass through. Thus, PDLC glass structures are used as architectural or vehicle windows or sunroofs capable of selectively adjusting light transmission.

Focusing on their automotive applications, most of the existing light control PDLC glass constructions adopts a laminated glass product form using PVB as adhesive interlayer. However, PDLC material is not compatible with PVB. Their combination causes the formation of a continuously expanded transparent boundary line at the periphery of the PDLC film, meaning the partial loss of its light control function. Thus, a need exists for a PDLC edge sealing material suitable for automotive applications that not only do not react with PDLC but also do not produce wrinkles in curves and corners as those formed when an adhesive tape is used as edge sealing.

The present invention proposes a solution to the technical problem mentioned above by means of a manufacturing method and a polymer.

### BRIEF DESCRIPTION OF THE INVENTION

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

A first object of the present invention relates to a method for manufacturing a smart film device, the method comprising unwinding a smart film arrangement from a first roller over a working surface, the smart film arrangement comprising a first conductive layer, a second conductive layer and a layer of a cured PDLC material between the first and second conductive layers, so that the smart film arrangement undergoes the following steps in this order:
a first cutting head performs a kiss-cut, thus cutting in the first conductive layer of the smart film arrangement, so that the kiss-cut divides the first conductive layer in a kiss-cut portion and a scrap portion, wherein the kiss-cut portion has an edge;
a removing roller removes the scrap portion of the first conductive layer from the smart film arrangement;
a curable polymer is applied along the edge of the kiss-cut portion;
a radiation source is applied over the curable polymer to cure the curable polymer, thus creating a cured polymer around the edge of the kiss-cut portion; and
a second cutting head cuts a final part which comprises the portion of the smart film arrangement comprising the kiss-cut portion and at least a portion of the cured polymer, separating the final part from the rest of the smart film arrangement.

With this method, a final portion is sealed with a cured polymer which protects the inside of the smart film portion from exterior chemical or physical agents. This way of manufacturing and protection is completely new and can be automated in an assembly line.

In some particular embodiments, the first cutting head and/or the second cutting head comprises a plotter blade cutting head or a laser cutting head. These plotter blade cutting head or laser cutting head are suitable tools to perform the kiss-cut operations, and can be easily adjusted to cut only the first conductive layer of the smart film arrangement without causing any damage in the rest of the film arrangement.

In some particular embodiments, the method further comprises the step of flattening the smart film arrangement with a flattening roller after the step of removing the scrap portion of the first conductive layer, so that the kiss-cut portions are flattened against the smart film arrangement.

During the step of removing the scrap portion, it is possible that some kiss-cut portions suffer an unwanted rise. To correct this incorrect separation, a flattening roller ensures that all the kiss-cut portions are perfectly flattened before the following steps.

By choosing the diameter of the flattening roller and the angle of separation of the scrap portion, the PDLC residue sticks to scrap portion and the main film remains clean and ready to receive the UV curable polymer. Then, an automatic head applies UV curable polymer covering a few millimeters at one side of the edge (in the PET side) and a few millimeters at the other side of the edge (in the ITO PET side), wherein the thickness of the curable polymer is comprised between 50 and 100 µm, thus leaving it ready to be cured by the radiation source.

In some particular embodiments, the step of applying a radiation source comprises using a UV light source that emits a UV radiation with a wavelength comprised between 365-385 nm during a time comprised between 1 and 5 seconds.

The UV source is particularly suitable for obtaining the radiation which cures the curable polymer.

In some particular embodiments, the steps of the method are performed continuously over adjacent portions of the smart film arrangement, and the step of removing the scrap portion is performed continuously, since the scrap portions corresponding to each kiss-cut portion are a continuous portion of the first conductive layer.

This method is performed in a continuous roller, so that, when a kiss-cut portion is created and the roller advances the smart film arrangement, a subsequent kiss-cut portion is created adjacent to the previous one. Hence, the process is a continuous process which creates a continuous flow of final portions.

In some particular embodiments, the width of the kiss-cut portion is comprised between 5-10 mm.

In a second inventive aspect, the invention provides an apparatus suitable for performing the steps of a method according to any of the preceding claims, the apparatus comprising:
a first roller;
a working surface arranged to receive the material unwind by the first roller;
a conveyor roller suitable for causing an advance movement in the material unwind by the first roller;
a first cutting head arranged to perform a kiss-cut in the material unwind by the first roller;
a removing roller arranged downstream the first cutting head, the removing roller being configured to remove a scrap portion of the material unwind by the first roller;
a polymer dispenser arranged downstream the removing roller and configured to deposit some polymer substance on the material unwind by the first roller;
a radiation source arranged downstream the polymer dispenser and configured to apply some radiation on the material unwind by the first roller; and
a second cutting head arranged downstream the radiation source and configured to perform a final cut in the material unwind by the first roller.

In a further inventive aspect, the invention presents an ultraviolet (UV)-curable polymer for edge sealing a polymer-dispersed liquid crystal (PDLC) film. Advantageously, said polymer comprises:
an acrylate oligomer, in a proportion between 5-50% w/w with respect to the total weight of the UV-curable polymer;
an oxygen inhibitor, in a proportion between 5-40% w/w with respect to the total weight of the UV-curable polymer;
a thiol, in a proportion between 5-50% w/w with respect to the total weight of the UV-curable polymer; and
a photoinitiator, in a proportion between 1-10% w/w with respect to the total weight of the UV-curable polymer.

When the surface of the polymeric substance is exposed to atmospheric oxygen during the curing, the oxygen reacts with free radicals to form peroxy radicals, which prevent the radicals from starting the crosslinking chain reaction. That is why the composition of the polymer of the invention includes an oxygen inhibitor and a thiol. Under the scope of interpretation of the present invention, the term "oxygen inhibitor" (or equivalent expressions "oxygen scavenger", "oxygen absorber", "oxygen interceptor" and the like) will be understood as any chemical compound with one or more reactive groups that can combine with oxygen to reduce the formation of peroxy radicals. In addition, the term "thiol" will be understood as any organosulfur compound of the form R-SH, where R represents an alkyl or other organic substituent. Thanks to this formulation, the phenomenon known as "oxygen inhibition" is greatly reduced.

This polymer is suitable for being used as the polymeric substance in the method of the first inventive aspect.

In some particular embodiments,
the acrylate oligomer is in a proportion between 20-40% w/w with respect to the total weight of the UV-curable polymer,
the oxygen inhibitor is in a proportion between 20-40% w/w with respect to the total weight of the UV-curable polymer, and/or
the thiol is in a proportion between 20-40% w/w with respect to the total weight of the UV-curable polymer.

In some particular embodiments, the acrylate oligomer comprises aliphatic urethane acrylate.

In some particular embodiments, the oxygen inhibitor comprises amine modified polyether acrylate.

In some particular embodiments, the thiol comprises trimethylolpropane triacrylate.

In some particular embodiments, the photoinitiator comprises a mixture of at least two components, wherein said components are the following:
bis (2,4,6-trimethylbenzoyl) phenylphosphine oxide and 2- hydroxy-2-methylpropiophenone; or
diphenyl (2,4,6-trimethyl benzoyl) phosphine oxide and hydroxycyclohexyl phenyl ketone; or
bis (2,4,6-trimethylbenzoyl) phenylphosphine oxide and hydroxycyclohexyl phenyl ketone; or
diphenyl (2,4,6-trimethyl benzoyl) phosphine oxide and 2- hydroxy-2-methylpropiophenone.

In some particular embodiments, each of the components of the mixture are in a proportion between 10-90% w/w with respect to the total weight of the photoinitiator.

### DESCRIPTION OF THE FIGURES

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a general view of an apparatus for performing a manufacturing method according to the invention.
Figure 2 shows a top view of a specific step of a manufacturing method according to the invention.
Figure 3 shows a top view of another specific step of a manufacturing method according to the invention.

In these figures, the following reference numbers have been used:
1 First roller
2 Working surface
3 Conveyor roller
4 Kiss-cutting head
5 Removing roller
6 Polymer dispenser
7 UV source
8 Second cutting head
9 Flattening roller
10 Smart film
40 Kiss-cut portion
41 Scrap portion
60 Polymeric substance

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

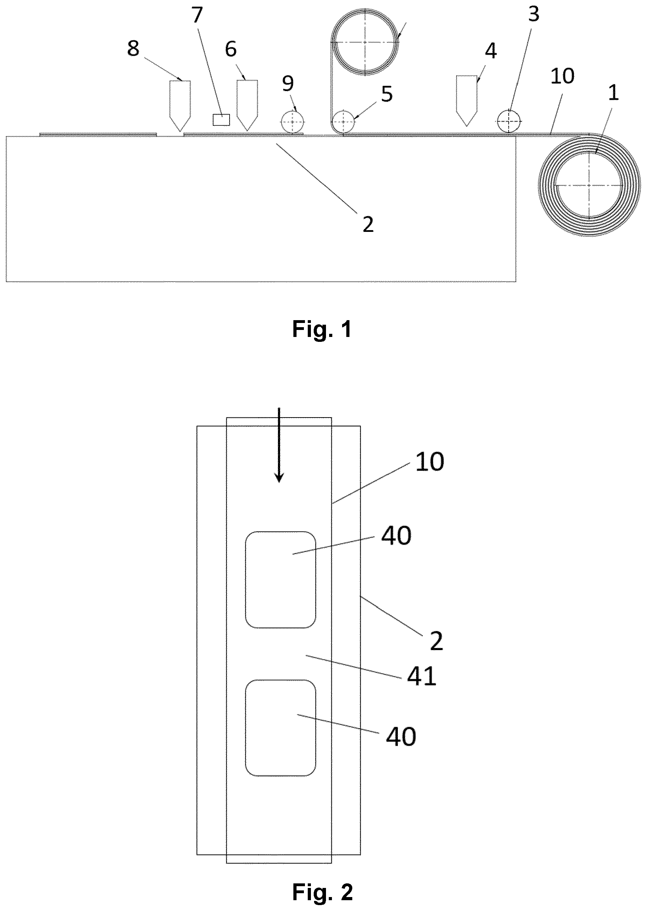

Figure 1 shows some steps of a method for manufacturing a smart film device according to the invention.

The method is performed by an apparatus comprising the following elements:
a first roller 1
a working surface 2 arranged to receive the material unwind by the first roller 1;
a conveyor roller 3 suitable for causing an advance movement in the material unwind by the first roller 1;
a kiss-cutting head 4 arranged to perform a cut in the material unwind by the first roller 1;
a removing roller 5 arranged downstream the kiss-cutting head 4, the removing roller 5 being configured to remove a scrap portion of the material unwind by the first roller 1;
a flattening roller 9 arranged downstream the removing roller 5;
a polymer dispenser 6 arranged downstream the removing roller 5 and configured to deposit some polymer substance on the material unwind by the first roller 1;
an UV source 7 arranged downstream the polymer dispenser 6 and configured to apply some UV radiation on the material unwind by the first roller 1;
a second cutting head 8 arranged downstream the UV source 7 and configured to perform a final cut in the material unwind by the first roller 1.

This apparatus is used under the steps of a method according to the invention.

A roll of smart film 10 is wound on the first roller 1. The method comprises unwinding the smart film 10 from the first roller 1 over a working surface 2, due to the action of the conveyer roller 3. The smart film 10 comprises a first conductive layer, a second conductive layer and a layer of a cured Polymer-Dispersed Liquid Crystal (PDLC) material between the first and second conductive layers.

The kiss-cutting head 4, which can be, e.g., a laser cutting head or a plotter-blade cutting head, performs a cut in the first conductive layer of the smart film 10, so that the cut divides the first conductive layer in a kiss-cut portion 40 and a scrap portion. This first cut may be observed in Figure 2 in a top view. The kiss-cutting head performs a cut which is similar to a rectangle with rounded vertices. The kiss-cut portion 40 is the inner portion of the rectangle, while the scrap portion 41 is the rest of the smart film. As can be seen in this figure, the operation of the first cutting head 4 is continuous, hence producing a series of kiss-cut portions 40, while the scrap portion is the continuous portion that is left when the kiss-cut portions 40 are obtained. This cut of the first cutting head only affects to the first conductive layer of the smart film 10, not affecting to the PDLC layer or to the second conductive layer of the smart film 10.

Coming back to Figure 1, once that the first cutting head 4 has performed the cut that creates the kiss-cut portions, a removing roller 5 arranged downstream the first cutting head 4 removes the scrap portion as it reaches the removing roller 5. As explained above, the scrap portion is the portion of the first conductive layer of the smart film 10 that is outside the cut that generates the kiss-cut portions. Hence, it is a continuous element, that is extracted by the removing roller 5.

The following step of the method includes the smart film 10 undergoing a flattening roller 9. This flattening roller 9 ensures that every portion of the first conductive layer is perfectly flattened. The reason of this flattening roller 9 is that, when the smart film 10 undergoes the removing roller 5, it is possible that, together with the scrap portion, some edges or corners of the kiss-cut portions are slightly raised. If the method continues with these raised portions, the final result would not be acceptable, so it is a good practice to ensure that the kiss-cut portions 40 are perfectly flattened before the next steps.

By choosing a suitable diameter of the flattening roller and angle of separation of the scrap portion, the PDLC residue would stick to scrap portion and the main film remains clean and ready to receive the UV curable polymer.

The following step of the method includes that a curable polymer is applied by a polymer dispenser 6 along the edge of the kiss-cut portion 40.

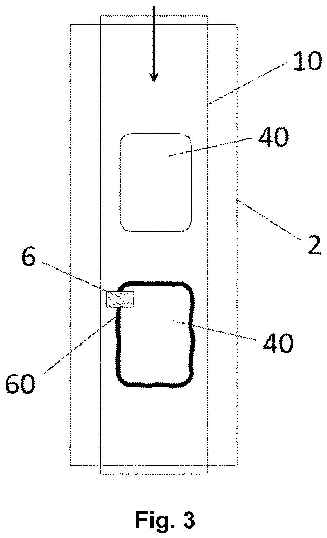

Figure 3 shows this step in a top view. The polymer dispenser applies a polymer substance 60 along the edge of the kiss-cut portion 40. This polymer contacts the edge of the first conductive layer (since the remainder of the conductive layer has been removed by the removing roller) and also contacts the layer which is immediately below, which is the PDLC layer, since the polymer is aimed to create a seal between the first conductive layer and the PDLC layer.

The automatic head of the polymer dispenser applies the UV curable polymer covering a few millimeters at one side of the edge (in the PET side) and a few millimeters at the other side of the edge (in the ITO PET side), wherein the thickness of the curable polymer is comprised between 50 and 100 µm, thus leaving it ready to be cured by the radiation source.

This polymer substance comprises
an acrylate oligomer, in a proportion between 20-40% w/w with respect to the total weight of the UV-curable polymer;
an oxygen inhibitor, in a proportion between 20-40% w/w with respect to the total weight of the UV-curable polymer;
a thiol, in a proportion between 20-40% w/w with respect to the total weight of the UV-curable polymer; and
a photoinitiator, in a proportion between 1-10% w/w with respect to the total weight of the UV-curable polymer.

The next step of the method includes the application of ultraviolet (UV) radiation by means of a UV source 7, such as a UV lamp. This UV source causes a quick curing process in the polymeric substance, which cures and hardens when exiting this UV source. In this case, the UV radiation has a wavelength comprised between 365-385 nm during a time comprised between 1 and 5 seconds.

When the UV-curable polymer of the invention is exposed to such UV wavelength, the photoinitiator is triggered to release radical species. These radical species then react with the acrylate oligomer to create a cross-linked polymer. To avoid that these free radicals also react with oxygen in the air and form very stable peroxy radicals, a thiol and an oxygen inhibitor have been included in the formulation. In this way, a very good beneath and surface curing can be faster achieved, requiring a smaller amount of photoinitiator. In addition to a fast curing, the formulation described above guarantee a polymer with good flexibility and low shrinkage.

The ultraviolet (UV)-curable polymer of the invention comprises an acrylate oligomer, in a proportion between 5-50% w/w with respect to the total weight of the UV-curable polymer. In a preferred embodiment of the invention, the concentration of the acrylate oligomer is comprised between 20-40% w/w with respect to the total weight of the UV-curable polymer. In particular embodiments, the concentration of the acrylate oligomer is 20% w/w, 25% w/w, 30% w/w, 35% w/w or 40% w/w.

The ultraviolet (UV)-curable polymer of the invention comprises an oxygen inhibitor, in a proportion between 20-40% w/w with respect to the total weight of the UV curable polymer. In particular embodiments, the concentration of the oxygen inhibitor is 20% w/w, 25% w/w, 30% w/w, 35% w/w, or 40% w/w.

The ultraviolet (UV)-curable polymer of the invention comprises a thiol, in a proportion between 20-40% w/w with respect to the total weight of the UV-curable polymer. In particular embodiments, the concentration of the thiol is 20% w/w, 25% w/w, 30% w/w, 35% w/w or 40% w/w.

The ultraviolet (UV)-curable polymer of the invention comprises a photoinitiator, in a proportion between 1-10% w/w with respect to the total weight of the UV-curable polymer. In particular embodiments, the concentration of the photoinitiator with respect to the total weight of the UV-curable polymer is 1% w/w, 2% w/w, 3% w/w, 4% w/w, 5% w/w, 6% w/w, 7% w/w, 8% w/w, 9% w/w, or 10% w/w. In another preferred embodiment of the invention, the photoinitiator comprises a mixture of at least two components, wherein said components are the following:
bis (2,4,6-trimethylbenzoyl) phenylphosphine oxide and 2- hydroxy-2-methylpropiophenone; or
diphenyl (2,4,6-trimethyl benzoyl) phosphine oxide and hydroxycyclohexyl phenyl ketone; or
bis (2,4,6-trimethylbenzoyl) phenylphosphine oxide and hydroxycyclohexyl phenyl ketone; or
diphenyl (2,4,6-trimethyl benzoyl) phosphine oxide and 2- hydroxy-2-methylpropiophenone.

In yet another preferred embodiment of the invention, each of the components of said mixture are in a proportion between 10-90% w/w with respect to the total weight of the photoinitiator.

In particular embodiments of the present invention, the ultraviolet (UV)-curable polymer comprises an acrylate oligomer, an oxygen inhibitor, a thiol, and a photoinitiator, but may comprise additional components. That is, the sum of the weight percentage of the acrylate oligomer, the oxygen inhibitor, the thiol, and the photoinitiator may be less than 100% of the total weight of the composition. For this reason, the person skilled in the art can understand that, in particular embodiments, the weight percentages of these components, the acrylate oligomer, the oxygen inhibitor, the thiol, and the photoinitiator, may be indicated as relative to one another, but not excluding the presence of additional components in the composition.

In other particular embodiments of the present invention, the ultraviolet (UV)-curable polymer only contains an acrylate oligomer, an oxygen inhibitor, a thiol, and a photoinitiator, and no additional components are present in the composition. That is, the sum of the weight percentage of the acrylate oligomer, the oxygen inhibitor, the thiol, and the photoinitiator results in 100% of the total weight of the composition.

Once the kiss-cut portion 40 has the polymeric substance cured and hardened, the next step of the method comprises the operation of a second cutting 8 head over the smart film 10. This second cutting head 8, which can be, e.g., a laser cutting head, cuts a portion of the smart film 10, affecting to the PDLC layer, which is in contact with the polymeric substance, and to the second conductive layer. The cut leaves the first conductive layer of the kiss-cut portion 40 untouched, since the aim of this cut is obtaining a final part which has a contour slightly greater than the contour of the kiss-cut portion 40. Thus, the final part includes at least part of the polymeric substance, which was applied along the edge of the kiss-cut portion.

Since the cut affects to the PDLC layer and the second conductive layer, the result of this cut is an independent final part which is separated from the rest of the smart film 10. As explained above, this method is performed in a continuous roller, so that, when a kiss-cut portion is created and the roller advances the smart film arrangement, a subsequent kiss-cut portion is created adjacent to the previous one. Hence, the process is a continuous process which creates a continuous flow of final portions.

## Claims

1. Method for manufacturing a smart film device, the method comprising unwinding a smart film arrangement (10) from a first roller (1) over a working surface (2), the smart film arrangement (10) comprising a first conductive layer, a second conductive layer and a layer of a cured PDLC material between the first and second conductive layers, so that the smart film arrangement undergoes the following steps in this order:
a first cutting head (4) performs a kiss-cut, thus cutting in the first conductive layer of the smart film arrangement (10), so that the kiss-cut divides the first conductive layer in a kiss-cut portion (40) and a scrap portion (41), wherein the kiss-cut portion (40) has an edge;
a removing roller (5) removes the scrap portion (41) of the first conductive layer from the smart film arrangement (10);
a curable polymer (60) is applied along the edge of the kiss-cut portion (40);
a radiation source (7) is applied over the curable polymer (60) to cure the curable polymer (60), thus creating a cured polymer around the edge of the kiss-cut portion (40);
a second cutting head (8) cuts a final part which comprises the portion of the smart film arrangement comprising the kiss-cut portion and at least a portion of the cured polymer, separating the final part from the rest of the smart film arrangement.

2. Method according to the preceding claim, wherein the first cutting head and/or the second cutting head comprises a plotter blade cutting head or a laser cutting head.

3. Method according to any of the preceding claims, further comprising the step of flattening the smart film arrangement (10) with a flattening roller (9) after the step of removing the scrap portion (41) of the first conductive layer, so that the kiss-cut portions are flattened against the smart film arrangement.

4. Method according to any of the preceding claims, wherein the step of applying a radiation source comprises using a UV light source (8) that emits a UV radiation with a wavelength comprised between 365-385 nm during a time comprised between 1 and 5 seconds.

5. Method according to any of the preceding claims, wherein the steps of the method are performed continuously over adjacent portions of the smart film arrangement, and the step of removing the scrap portion is performed continuously, since the scrap portions corresponding to each kiss-cut portion are a continuous portion of the first conductive layer.

6. Apparatus suitable for performing the steps of a method according to any of the preceding claims, the apparatus comprising:
a first roller (1);
a working surface (2) arranged to receive the material unwind by the first roller (1);
a conveyor roller (3) suitable for causing an advance movement in the material unwind by the first roller (1);
a first cutting head (4) arranged to perform a kiss-cut in the material unwind by the first roller (1);
a removing roller (5) arranged downstream the first cutting head (4), the removing roller (5) being configured to remove a scrap portion (41) of the material unwind by the first roller (1);
a polymer dispenser (6) arranged downstream the removing roller and configured to deposit some polymer substance (60) on the material unwind by the first roller (1);
a radiation source (7) arranged downstream the polymer dispenser and configured to apply some radiation on the material unwind by the first roller;
a second cutting head (8) arranged downstream the radiation source and configured to perform a final cut in the material unwind by the first roller.

7. Ultraviolet (UV)-curable polymer for edge sealing a polymer-dispersed liquid crystal (PDLC) film, suitable for being used in a method according to any of claims 1 to 5, the polymer being **characterized in that** it comprises:
- an acrylate oligomer, in a proportion between 20-40% w/w with respect to the total weight of the UV-curable polymer;
- an oxygen inhibitor, in a proportion between 20-40% w/w with respect to the total weight of the UV-curable polymer;
- a thiol, in a proportion between 20-40% w/w with respect to the total weight of the UV-curable polymer; and
- a photoinitiator, in a proportion between 1-10% w/w with respect to the total weight of the UV-curable polymer.

8. UV-curable polymer according to claim 7, wherein the acrylate oligomer comprises aliphatic urethane acrylate.

9. UV-curable polymer according to any of claims 7 or 8, wherein the oxygen inhibitor comprises amine modified polyether acrylate.

10. UV-curable polymer according to any of claims 7 to 9, wherein the thiol comprises trimethylolpropane triacrylate.

11. UV-curable polymer according to any of claims 7 to 10, wherein the photoinitiator comprises a mixture of at least two components, wherein said components are the following:
bis (2,4,6-trimethylbenzoyl) phenylphosphine oxide and 2- hydroxy-2-methylpropiophenone; or
diphenyl (2,4,6-trimethyl benzoyl) phosphine oxide and hydroxycyclohexyl phenyl ketone; or
bis (2,4,6-trimethylbenzoyl) phenylphosphine oxide and hydroxycyclohexyl phenyl ketone; or
diphenyl (2,4,6-trimethyl benzoyl) phosphine oxide and 2- hydroxy-2-methylpropiophenone.

12. UV-curable polymer according to claim 11, wherein each of the components of the mixture are in a proportion between 10-90% w/w with respect to the total weight of the photoinitiator.
